# FASCICULE DE BREVET EUROPEEN

(11) **EP 2 412 846 B1**
(45) Date de publication et mention de la délivrance du brevet: **20.03.2019**
(21) Numéro de dépôt: 11174922.2
(22) Date de dépôt: 21.07.2011
(51) Int. Cl.: C23C 18/12, C03C 1/00, C09D 183/04, C08K 3/22, C08K 5/5419, A47J 37/10, A47J 36/02, B05D 5/08, B05D 5/06, C09D 5/26, G01K 11/12, B05D 7/14

(54) **Article comprenant un revêtement sol-gel muni d'un décor fonctionnel et procédé de fabrication d'un tel article**
Artikel, der mit einer Sol-Gel-Beschichtung mit funktionellem Dekor ausgestattet ist, und Herstellungsverfahren dieses Artikels
Article comprised of a sol-gel coating with a functional decor, and method for manufacturing such an article

(30) Priorité: 26.07.2010 FR 1056092
(43) Date de publication de la demande: 01.02.2012
(73) Titulaire: SEB S.A., 69130 Ecully (FR)
(72) Inventeur: Le Bris, Stéphanie, 73000 Chambéry (FR); Dubanchet, Aurélien, 73100 Grésy-sur-Aix (FR); Joutang, Isabelle, 73290 La Motte Servolex (FR); Perillon, Jean-Luc, 26130 Saint Paul Trois Chateaux (FR)
(74) Mandataire: Regimbeau

(56) Documents cités:
- EP-A1- 2 177 580
- WO-A2-2010/043827
- FR-A1- 2 915 205
- FR-A1- 2 937 236
- US-B1- 6 551 693

## Description

La présente invention concerne de manière générale des articles comportant une surface recouverte d'un revêtement sol-gel muni d'un décor fonctionnel. La présente invention concerne également un procédé de fabrication de tels articles.

Les articles concernés par la présente invention peuvent notamment être des articles culinaires tels que des poêles, des casseroles, des sauteuses, des grilles de barbecue, des semelles de fer à repasser, ou encore des plaques de lisseur à cheveux.

Par décor fonctionnel, on entend, au sens de la présente invention, un décor permettant de guider l'utilisateur de l'article dans son utilisation.

Par revêtement sol-gel, on entend au sens de la présente invention un revêtement synthétisé par voie sol-gel à partir d'une solution à base de précurseurs en phase liquide, qui se transforme en un solide par un ensemble de réactions chimiques (hydrolyse et condensation), à basse température. Le revêtement ainsi obtenu peut être soit organo-minéral, soit entièrement minéral.

Par revêtement organo-minéral, on entend au sens de la présente invention, un revêtement dont le réseau est essentiellement inorganique, mais qui comporte des groupements organiques, notamment en raison des précurseurs utilisés et de la température de cuisson du revêtement.

Par revêtement entièrement minéral, on entend, au sens de la présente invention, un revêtement constitué d'un matériau entièrement inorganique, exempt de tout groupement organique. Un tel revêtement peut également être obtenu par voie sol-gel avec une température de cuisson d'au moins 400°C, ou à partir de précurseurs de type tétraéthoxy-silane (TEOS) avec une température de cuisson qui peut être inférieure à 400°C.

Dans le domaine des revêtements sol-gel, on connaît notamment ceux obtenus à partir d'alcoxydes métalliques à base de silicium (silanes) ou à base d'aluminium (aluminates).

Ces revêtements ont actuellement un développement important dans le domaine des articles culinaires, et en particulier à titre de revêtements antiadhésifs recouvrant la surface interne de cuisson.

Ces revêtements antiadhésifs, qui sont synthétisés par voie sol-gel à partir de précurseurs de type polyalcoxylate métallique, ont un réseau hybride, généralement de silice avec des groupements alkyles greffés. Par rapport aux revêtements traditionnels antiadhésifs pour articles culinaires à base de polytétrafluoroéthylène (PTFE), ce type de revêtement obtenu par voie sol-gel présente comme principal avantage une très bonne tenue à des températures supérieures à 300°C.

Une formulation de ce type de revêtement est décrite dans la demande internationale WO 2008/010639. Il s'agit en particulier d'un revêtement formé par voie sol-gel à partir d'une composition à base de silane, ce revêtement étant appliqué sur un substrat en aluminium anodisé destiné à servir d'article culinaire.

Par ailleurs, la demanderesse a aussi développé un revêtement de ce type destiné à des articles culinaires. Ainsi, les demandes internationale WO 2008/142327 et européenne EP 2 139 964, appartenant à la demanderesse, décrivent un revêtement formé par voie sol-gel à partir d'une composition à base d'au moins un alcoxyde métallique et d'un oxyde métallique colloïdal, dans laquelle est ajoutée une très faible quantité d'huile de silicone. Le revêtement ainsi formé est non seulement résistant à haute température, mais il est également apte à supporter un passage de plusieurs minutes à la flamme d'un bec bunsen (dont la température est supérieure à 600°C) et de retrouver ensuite rapidement son caractère hydrophobe.

Les demandes de brevet internationale WO 2007/104258 et européenne EP 1 835 002n appartenant à la société CERASOL HONG KONG LDT spécialisée dans la recherche et développement de revêtements céramiques pour des applications domestiques et industrielles, décrivent la formulation et le procédé de fabrication d'un revêtement antiadhésif ayant une résistance à l'abrasion, une dureté et une tenue à l'usure améliorés par rapport à un revêtement PTFE. Il s'agit d'un revêtement bicouche constitué d'un primaire composé de silice colloïdale, d'organoalkoxysilanes avec éventuellement un polydiméthylsiloxane (PDMS), et d'une couche de finition transparente composé de silice colloïdale d'organoalkoxysilanes dont un fluoroalkoxysilane pour apporter de l'anti-adhésivité et éventuellement un PDMS.

Enfin, la demande de brevet CN 101502378 décrit de façon détaillée la formulation d'un revêtement pour articles culinaires permettant de réduire, voire de supprimer l'oxydation des huiles comestibles. Il s'agit d'un revêtement formé par voie sol-gel à partir d'une composition à base de méthyltriméthoxysilane (MTMS) ou de méthyltriéthoxysilane (MTES) et d'une dispersion d'alumine colloïdale, chargée avec différentes charges inorganiques dont une poudre d'argent nano permettant de stopper le mécanisme d'oxydation des huiles.

Aucun de ces revêtements de type sol-gel connus de l'art antérieur n'est muni d'un indicateur fonctionnel, c'est-à-dire un indicateur permettant d'accompagner et de guider l'utilisateur de l'article sur lequel le revêtement en question est déposé.

La présente invention vise à proposer au consommateur un article comprenant un revêtement synthétisé par voie sol-gel, doté d'un décor fonctionnel permettant de le guider dans son utilisation.

Plus particulièrement, la présente invention a pour objet un article comprenant un support comprenant deux faces opposées, et un revêtement sol-gel recouvrant l'une au moins des faces dudit support, ledit revêtement sol-gel se présentant sous forme d'un film continu d'un matériau comprenant une matrice formée à partir d'au moins un polyalcoxylate métallique et d'au moins 5 % en poids par rapport au poids total du revêtement d'au moins un oxyde métallique colloïdal dispersé dans ladite matrice. Ledit revêtement sol-gel est revêtu d'un décor fonctionnel qui se présente sous forme d'au moins une couche discontinue comprenant au moins une substance chimique optiquement non transparente, et dont la composition est choisie dans le groupe des compositions de décor exemptes de liant thermostable. Le décor fonctionnel est recouvert d'une couche continue de finition transparente, qui comporte à titre de liant un matériau sol-gel comprenant une matrice formée à partir d'au moins un polyalcoxylate métallique et au moins 5% en poids par rapport au poids total du revêtement d'au moins un oxyde métallique colloïdal dispersé dans la matrice.

La couche de finition transparente sert à protéger le décor de l'abrasion (tout en laissant une visibilité du décor sous-jacent) et confère à l'ensemble du revêtement (c'est-à-dire le revêtement sol-gel, le décor et la couche de finition) ses propriétés anti-adhérentes.

Dans le cadre de la présente invention, l'indicateur fonctionnel est un élément différenciant, actif ou passif, présentant une couleur et/ou une brillance différentes du revêtement sol-gel au moins à une température donnée.

Dans le cas d'un indicateur fonctionnel passif, cette (ou ces) différence(s) est (sont) thermostable(s) (c'est-à-dire n'évoluant pas lorsque la température de l'article évolue), qui peut par exemple consister en une graduation, ou encore une marque permettant de guider visuellement l'utilisateur pour positionner les aliments au centre de l'article (dans le cas d'un article culinaire).

Dans le cas d'un indicateur fonctionnel actif, cette (ou ces) différence(s) est (sont) thermochrome(s) (c'est-à-dire évoluant lorsque la température de l'article évolue), qui peut donc indiquer à l'utilisateur de l'article la température atteinte par le revêtement en cours d'utilisation. Ainsi, un indicateur fonctionnel thermochrome présente un intérêt dans le cas d'un article culinaire, où un bon contrôle de la température lors de la cuisson des aliments est nécessaire pour des raisons sanitaires et gustatives (par exemple pour saisir un steak sur un grill ou dans une poêle), et pour limiter les surchauffes ponctuelles fragilisant le revêtement de l'article culinaire. Dans le cas d'un lisseur à cheveux, un indicateur fonctionnel thermochrome permet à l'utilisateur de connaître la température d'utilisation optimale du lisseur. Enfin, dans le cas d'un fer à repasser, un indicateur fonctionnel thermochrome permet d'éviter par exemple tout risque de brûlure avec la semelle chaude (notamment lorsque le fer a atteint sa température de fonctionnement et que le voyant lumineux du thermostat s'éteint).

A titre de substances chimiques optiquement non transparentes utilisables dans la couche de décor selon l'invention, on peut ainsi citer les pigments thermostables, les pigments thermochromes, les paillettes, et leurs mélanges.

Un indicateur fonctionnel passif au sens de la présente invention ne comprendra que des pigments ou des paillettes thermostables à titre de substances chimiques optiquement non transparentes.

Par contre, un indicateur fonctionnel actif au sens de la présente invention comprendra nécessairement à titre de substances chimiques optiquement non transparentes une composition pigmentaire thermochrome, avec au moins un pigment thermochrome, qui est de préférence semi-conducteur (SC).

De préférence, le décor peut comporter au moins deux couches discontinues partiellement superposées.

Selon un mode de réalisation de l'invention, la surface intérieure du support est recouverte, au moins partiellement par un décor discontinu comprenant une pluralité de motifs, qui se répartissent en deux catégories :
▪ des motifs qui comprennent un pigment thermochrome s'assombrissant avec la montée en température (par exemple l'oxyde ferrique), et
▪ des motifs qui comprennent un pigment thermochrome s'éclaircissant avec la température (par exemple un mélange pigmentaire constitué de rouge de pérylène et d'un pigment noir de grade alimentaire tel que le FA1120 de FERRO).

Selon un autre mode de réalisation de l'invention, cette composition pigmentaire thermochrome pourra comprendre :
∘ des grains pigmentaires composites à structure coeur-enveloppe, dont le diamètre est compris entre 20 nm et 25000 nm et qui comprennent chacun :
   ▪ un coeur comprenant un pigment SC thermochrome liposensible à chaud (c'est-à-dire susceptible de se dégrader à chaud en contact d'une huile ou d'une graisse), et
   ▪ une enveloppe solide, transparente et continue, qui est constituée par un matériau minéral (qui est de préférence une coque en silice) ou un matériau hybride organo-minéral, et
∘ de manière optionnelle au moins un pigment thermostable, se trouvant à l'intérieur ou à l'extérieur des grains pigmentaires composites, le pigment thermostable étant tel que défini précédemment.

A titre de polyalcoxylate métallique utilisable à titre de liant dans le revêtement ainsi que dans la couche de finition, on peut notamment citer les polyalcoxysilanes, les aluminates, les titanates, les zirconates, les vanadates, les borates et leurs mélanges.

A titre d'oxyde métallique colloïdal utilisable dans le revêtement ainsi que dans la couche de finition, on peut notamment citer la silice, l'alumine, l'oxyde de cérium, l'oxyde de zinc, l'oxyde de vanadium et l'oxyde de zirconium. Les oxydes métalliques colloïdaux préférés sont la silice et l'alumine.

Le décor selon l'invention étant exempt de liant thermostable, l'ajout d'additifs de formulation peut s'avérer nécessaire pour adapter les propriétés de la composition au procédé d'application. Ainsi, pour des applications par sérigraphie ou tampographie, la présence d'au moins un épaississant est nécessaire dans la composition de la ou des couches du décor, cet épaississant peut être de nature organique (base uréthane, base acrylique, base cellulose...) ou inorganique (silice pyrogénée, Laponite®...). D'autres modes d'applications du décor sont possibles, notamment par pulvérisation, au rideau, au rouleau, au trempé, au pinceau, par jet d'encre, etc. La compatibilité d'un décor sans liant avec la ou les couches adjacentes (en l'occurrence la couche de revêtement sol-gel et, le cas échéant, la couche de finition) est parfaite : absence de problème de mouillabilité lors de l'application de la couche de surface sur le décor et absence de problème de clivage des couches après cuisson. En outre, la composition d'une couche de décor sans liant est facilement adaptable à différents procédés d'application, tout en restant stable dans le temps.

On peut envisager différents types d'articles conformes à l'invention, de différentes formes et réalisés dans différents matériaux.

Ainsi, le support peut être en un matériau choisi parmi les métaux, le bois, le verre, les céramiques et les matières plastiques.

De préférence, le support sera un support métallique en aluminium anodisé ou non, ou en aluminium poli, brossé ou microbillé, sablé, traité chimiquement ou en acier inoxydable poli, brossé ou microbillé, ou en fonte, ou en cuivre martelé ou poli.

En ce qui concerne la forme, le support doit présenter la forme finale de l'article, car il ne peut être embouti après dépôt du revêtement sol-gel.

Dans le domaine culinaire, on peut par ailleurs envisager différentes formes de support, et notamment des articles culinaires en tant que tels, destinés ou non à la cuisson d'aliments, avec :
▪ une première des faces opposées est une face intérieure concave destinée à être disposée du côté d'aliments susceptibles d'être introduits dans l'article, et
▪ une seconde des faces opposées est une face extérieure convexe destinée à être disposée du côté d'une source de chaleur.

A titre d'exemples non limitatifs d'articles culinaires conformes à la présente invention, on citera notamment des articles culinaires tels que les casseroles et les poêles, les woks et les sauteuses, les crêpières, les grills, les moules et plaques pour la pâtisserie, les plaques et grilles de barbecue.

On peut également envisager d'autres types de supports qui ne sont pas limités au seul domaine culinaire. Ainsi, on peut également envisager à titre d'articles conformes à l'invention des articles électroménagers, ou encore des composants en matière plastique pour l'automobile ou le flaconnage.

La présente invention a encore pour objet un procédé de fabrication d'un article selon l'invention, comprenant les étapes successives suivantes :
a) la fourniture d'un support métallique en forme comprenant deux faces opposées, puis
b) la réalisation d'un revêtement sol-gel sur l'une au moins des faces dudit support, qui comprend les étapes successives suivantes :
   • b1) la préparation d'une composition sol-gel SG comprenant au moins un oxyde métallique colloïdal et au moins un précurseur de type alcoxyde métallique ;
   • b2) l'application, sur tout ou partie de l'une au moins des faces dudit support, d'au moins une couche de la composition sol-gel SG ayant une épaisseur comprise d'au moins 5 µm ; puis
d) la cuisson de l'article pour obtenir un revêtement sol-gel d'au moins 1 µm d'épaisseur,
ledit procédé étant caractérisé en ce qu'il comporte en outre, préalablement à l'étape d) de cuisson, une étape c) de réalisation d'un décor fonctionnel comprenant l'application, sur au moins une partie du revêtement sol-gel, d'au moins une couche composition de décor comprenant au moins une substance chimique optiquement non transparente pour former un décor, ladite composition de décor présentant une viscosité minimale de 1,5 Pa.s mesurée à température ambiante et pour une vitesse de cisaillement entre 1 et 1000 s⁻¹.

La mesure de la viscosité peut se faire à l'aide d'un viscosimètre (par exemple celui commercialisé par la société BROOKFIELD) ou d'un rhéomètre (par exemple celui commercialisé par la société GEMINI).

La cuisson des couches de revêtement sol-gel et de finition se fait donc simultanément.

L'alcoxyde métallique est tel que défini ci-dessus. Il s'agit de préférence d'un oxyde métallique colloïdal choisi parmi la silice colloïdale et/ou l'alumine colloïdale.

On utilise de préférence à titre de précurseur un alcoxyde métallique choisi dans le groupe constitué par :
- les précurseurs répondant à la formule générale M₁(OR₁)ₙ,
- les précurseurs répondant à la formule générale M₂(OR₂)₍ₙ₋₁₎R₂', et
- les précurseurs répondant à la formule générale M₃(OR₃)₍ₙ₋₂)R₃'₂, avec :
   R₁, R₂, R₃ ou R₃' désignant un groupement alkyle,
   R₂' désignant un groupement alkyle ou phényle,
   n étant un nombre entier correspondant à la valence maximale des métaux M₁, M₂ ou M₃,
   M₁ M₂ ou M₃ désignant un métal choisi parmi Si, Zr, Ti, Sn, Al, Ce, V, Nb, Hf, Mg ou Ln,
   Avantageusement, l'alcoxyde métallique de la solution SG est un alcoxysilane.

A titre d'alcoxysilanes utilisables dans la solution SG du procédé de l'invention, on peut notamment citer le méthyltriméthoxysilane (MTMS), le tétraéthoxysilane (TEOS), le méthyltriéthoxysilane (MTES), le diméthyldiméthoxysilane, et leurs mélanges.

De manière préférée, on utilisera les alcoxysilanes MTES et TEOS, car ils présentent l'avantage de ne pas contenir de groupements méthoxy. En effet l'hydrolyse des méthoxy conduit à la formation de méthanol dans la formulation sol-gel, ce qui compte tenu de son classement toxique nécessite des précautions supplémentaires lors de l'application. A contrario l'hydrolyse des groupements éthoxy ne génère que de l'éthanol possédant un classement plus favorable et donc des prescriptions d'utilisations moins contraignantes pour le revêtement sol-gel.

Avantageusement, le procédé selon l'invention peut en outre comporter entre l'étape c) de réalisation du décor fonctionnel et la cuisson d) de l'article, une étape c') d'application, sur ledit décor, d'une couche continue de finition transparente comprenant :
- la préparation d'une composition sol-gel transparente SG' comprenant au moins un alcoxyde métallique colloïdal et au moins un précurseur de type oxyde métallique ; puis
- l'application, sur le décor et les parties du revêtement sol-gel éventuellement non recouvertes par le décor, d'au moins une couche de la composition sol-gel SG' ayant une épaisseur d'au moins 1 µm à l'état humide.

Avantageusement, le décor peut comporter à titre d'épaississant un polyélectrolyte anionique à raison de 2 % à 20 % en poids par rapport au poids total de du décor.

L'invention est illustrée plus en détail dans les exemples suivants. Dans les exemples, sauf indication contraire, tous les pourcentages et parties sont exprimés en poids.

### EXEMPLES

### Produits

### Couche de décor fonctionnel

### Pigments thermostables

▪ dioxyde de titane (couleur blanche) (grade RN56 de chez Kronos)
▪ aluminosilicate de sodium polysulfuré de couleur bleue outremer (grade CM13 de chez Holliday Pigments)
▪ ou tout autre pigment résistant à une température égale ou supérieure à 200°C

### Pigments thermochromes

▪ Oxyde ferrique Fe₂O₃ commercialisé par la société Bayer sous la dénomination Bayferrox
▪ Rouge de pérylène, associé à un pigment noir thermostable de grade alimentaire (FA1220 de Ferro)
   **Paillettes :** paillettes Iriodin 100 de chez Merck
   **Epaississant :** copolymère d'acide méthacrylique et d'ester acrylique
   **solvant :** propylène glycol

### Couches de revêtement de base et de finition

▪ silice colloïdale sous forme de solution aqueuse à 30% de silice, commercialisée par la société Clariant sous la dénomination commerciale Klebosol
▪ Isopropanol
▪ pigments noirs de grade alimentaire commercialisés par la société FERRO sous la dénomination commerciale FA1220
▪ précurseur de polymérisation sol-gel : méthyltriéthoxysilane MTES
▪ acide organique : acide acétique

### EXEMPLE 1 : Réalisation d'exemples d'articles culinaires selon l'invention

On réalise un récipient de cuisson conforme à l'invention de la manière décrite ci-après, en faisant référence aux figures annexées données à titre d'exemples non limitatifs :
- la figure 1 est une vue en coupe transversale d'un récipient de cuisson comparatif muni d'un décor thermochrome disposé sur le revêtement sol-gel, sans couche de finition.
- la figure 2 est une vue en coupe transversale d'un premier exemple de récipient de cuisson selon l'invention, muni d'un décor thermochrome disposée sur le revêtement sol-gel, lui-même revêtu d'une couche de finition,
- la figure 3 est une vue de dessus du récipient comparatif de la figure 1 et du récipient selon l'invention représenté sur la figure 2,
- la figure 4 est une vue de dessus d'un deuxième exemple de récipient de cuisson selon l'invention muni d'un décor thermostable sous forme de pastille en forme de disque disposée au centre de la surface intérieure du récipient,
- la figure 5 est une vue de dessus d'un troisième exemple de récipient de cuisson selon l'invention muni d'un décor thermostable sous forme de cercles concentriques.

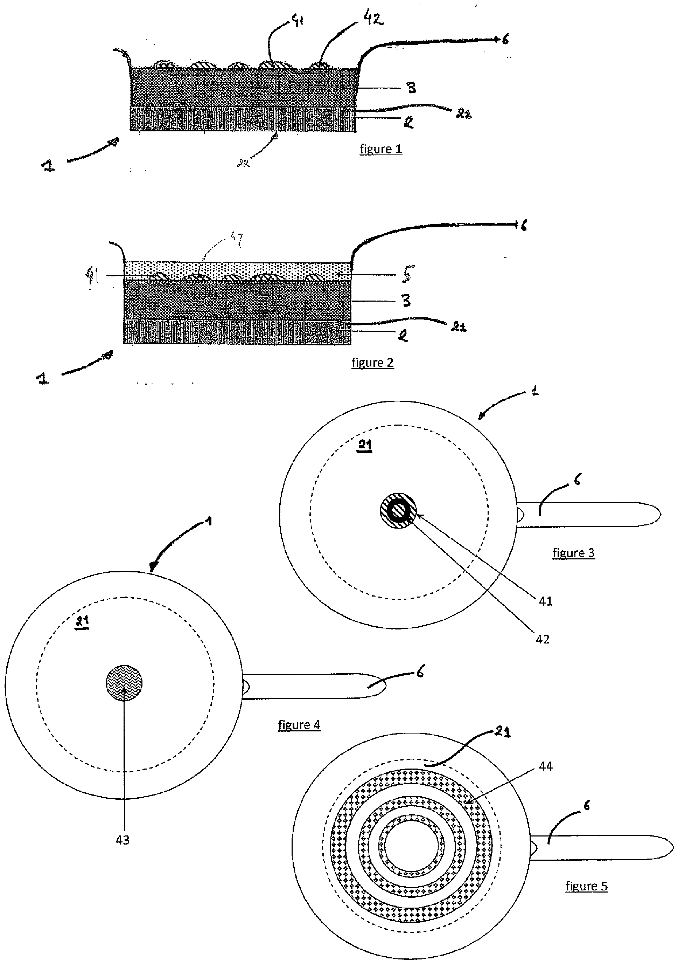

Les éléments identiques représentés sur les figures 1 à 5 sont identifiés par des références numériques identiques.

Sur les figures 1 à 5, on a représenté un article culinaire comparatif (figure 1) et à titre d'exemple d'article culinaire selon l'invention (figures 2 à 5), une poêle 1 comportant un support métallique 2 sous forme de calotte creuse munie d'une poignée de préhension 6, le support 2 ayant une surface intérieure 21 destinée à être chauffée et à recevoir des aliments en vue de leur cuisson, et une surface extérieure destinée à être disposée sur une source de chaleur.

Sur l'article culinaire comparatif illustré sur la figure 1, la surface intérieure 21, qui a été préalablement au moins dégraissée et dépoussiérée, est recouverte d'un revêtement 3 de type sol-gel, conformément au procédé de réalisation décrit à l'exemple 3. Typiquement, il peut comporter des pigments noirs de grade alimentaire tels que le FA1220.

Pour favoriser l'adhérence du revêtement 3 de type sol-gel 3 sur la surface intérieure 21 du support 2, celle-ci est préalablement traitée (par exemple par sablage) de façon à augmenter sa surface spécifique.

Le revêtement 3 sol-gel est recouvert au moins partiellement par un décor discontinu comprenant une pluralité de motifs 41, 42, qui se répartissent en deux catégories comme illustré par la figure 3 :
▪ des motifs 41 qui comprennent l'oxyde ferrique Fe₂O₃, qui est un pigment thermochrome s'assombrissant avec la montée en température, et
▪ des motifs 42 qui comprennent un mélange pigmentaire thermochrome s'éclaircissant avec la température constitué de rouge de pérylène et de FA1220

Le décor avec ses deux catégories de motifs différents 41, 42 est appliqué par tampographie, conformément au mode de réalisation de la couche de décor décrit à l'exemple 2.

La première variante d'article culinaire selon l'invention, qui est illustrée sur la figure 2 (ainsi que par la figure 3 pour la répartition des motifs), se différencie de l'article culinaire comparatif (illustré sur la figure 1) en ce qu'une couche de finition 5 transparente est appliquée sur le décor et les parties du revêtement 3 de type sol-gel qui ne sont pas recouvertes pas les motifs 41, 42 du décor, conformément au procédé de réalisation décrit à l'exemple 4.

### Performances d'anti-adhérence

**Pour le revêtement comparatif illustré sur la** **figure 1** **: acceptables** car on peut facilement retirer un oeuf cuit sur le revêtement comparatif à l'aide d'une spatule
**Pour le revêtement selon l'invention illustré sur la** **figure 2** **: nettement améliorées** par rapport à celles obtenues avec le revêtement comparatif illustré sur la figure 1 car un oeuf cuit sur un tel revêtement selon l'invention glisse avec un simple mouvement de l'article.

### Résistance à l'usure

**Pour le revêtement comparatif illustré sur la** **figure 1** **: acceptables** car le revêtement comparatif peut être soumis à 500 passages de tampon abrasif sans détériorer le décor (résistance à l'usure).
**Pour le revêtement selon l'invention illustré sur la** **figure 2** **: nettement améliorées** par rapport à celles obtenues avec le revêtement comparatif illustré sur la figure 1 car le revêtement selon l'invention peut être soumis à 5000 passages de tampon abrasif sans détériorer le décor.

Sur une deuxième variante d'article culinaire selon l'invention illustrée sur la figure 4, le décor est constitué par une pastille centrale 43 disposée au centre de l'article 1. Cette pastille 43 comprend un pigment thermostable, par exemple du dioxyde de titane pour une couleur blanche (de grade RN56 de chez Kronos) ou un bleu outremer aluminosilicate de sodium polysulfuré de couleur bleue outremer (grade CM13 de chez Holliday Pigments). Un tel motif 43 peut permettre d'identifier un article culinaire (code couleur par type d'utilisation : par exemple un motif 43 de couleur bleue pour une utilisation spécifique pour la cuisson des poissons, un motif 43 de couleur rouge pour une utilisation spécifique à la cuisson de viandes, un motif 43 de couleur verte pour une utilisation spécifique à la cuisson de légumes, etc.).

Sur une troisième variante d'article culinaire selon l'invention illustrée sur la figure 5, le décor est constitué de cercles concentriques 44 comprenant des paillettes (par exemple Iriodin 100 de chez Merck). Un tel motif 44 permet d'aider le consommateur à bien positionner les aliments qu'il souhaite cuire sur l'article 1.

### EXEMPLE 2 : réalisation d'une couche de décor

On prépare préalablement deux pâtes pigmentaires comme suit :
- la première pâte pigmentaire est obtenue en dispersant 50 g d'oxyde ferrique Fe₂O₃, dans 100 g d'eau, tandis que
- la deuxième pâte pigmentaire est obtenue en dispersant 35 g de rouge de pérylène et 15 g de FA1220 dans 100 g d'eau.

La composition (ou formule) de chacun des motifs 41, 42 ne diffère que par la nature des pigments utilisés, et donc de la pâte pigmentaire utilisée. Chaque composition comprend donc une pâte pigmentaire, diluée avec de l'eau et un mélange de solvants plus lourds tels que le propylène glycol pour maitriser le séchage de la formule. On obtient donc deux dispersions, qui sont chacune ensuite épaissies de manière suffisante grâce à un polyélectrolyte anionique (copolymère d'acide méthacrylique et d'ester acrylique) pour avoir une rhéologie adaptée à une application par tampographie.
Les deux compositions épaissies ainsi obtenues (l'une à base de la première pâte pigmentaire, et l'autre à base de la deuxième pâte pigmentaire) sont appliquées, sous forme de motifs contigus en au moins une couche sur le revêtement 3 de type sol-gel, conformément à l'article culinaire comparatif de la figure 1 et aux première et deuxième variantes d'article culinaire selon l'invention illustrées sur les figures 2 et 3.

Dans le cas d'une application en plusieurs couches de ces compositions épaissies, chaque couche est séchée avant l'application de la suivante.

Ces deux compositions épaissies sont appliquées dans des zones contigües pour améliorer la lisibilité de la zone de virage (c'est-à-dire une plus grande facilité pour le lecteur à la compréhension de l'indication donnée par les motifs 41, 42 thermochromes).

### EXEMPLE 3 : réalisation de la couche 3 de revêtement sol-gel

Une composition sol-gel est préparée sous la forme d'un bi-composant comprenant une partie A et une partie B :
- la partie A comprend une dispersion de silice colloïdale, d'eau pour permettre l'hydrolyse des précurseurs métalliques de la partie B, d'isopropanol pour permettre une bonne comptabilisation des parties A et B et de pigments noir de grade alimentaire.
- la partie B comporte à titre de précurseur sol-gel du méthyltriéthoxysilane, qui permet la formation de la matrice du revêtement en ne rejetant que de l'éthanol (qui est un composé organo-volatil (COV) non toxique, contrairement au méthyltriméthoxysilane qui conduit à la formation de méthanol, qui est un COV toxique), ainsi que l'acide acétique permettant de catalyser la réaction sol-gel.

Ces deux parties A et B peuvent se conserver pendant plus de 6 mois sous cette forme séparée.

Puis, les parties A et B sont réunies dans un mélangeur pour créer un mélange intime et permettre l'initiation de la réaction d'hydrolyse. Il est ensuite nécessaire de laisser mâturer le mélange pendant au moins 24 heures avant l'application proprement dite, de manière à faire progresser suffisamment les réactions d'hydrolyse et de condensation. La durée de vie en pot du mélange est d'au moins 72 heures.

Puis, le mélange est filtré sur une grille en acier inoxydable ayant des orifices de 40 microns de diamètre avant d'être appliqué, au pistolet pneumatique, en au moins une couche d'épaisseur de 5 à 50 microns directement et intégralement sur la surface intérieure 21 du support 2 conformément à l'article culinaire comparatif de la figure 1 et aux première et deuxième variantes de réalisation (respectivement illustrées sur les figures 2 et 3).

Dans le cas d'une application en plusieurs couches, chaque couche est séchée avant l'application de la suivante.

On obtient une couche 3 de revêtement, qui est ensuite soumis à une cuisson à 250°C pendant 15 minutes.

### EXEMPLE 4 : réalisation de la couche de finition 5

Une couche de finition 5 est réalisée de la même façon que la couche de revêtement 3 sol-gel, la seule différence étant qu'elle doit rester transparente.

La formulation des parties A' et B' (correspondant respectivement aux parties A et B de l'exemple 3), le mode opératoire et l'application sont identiques à ceux décrits dans l'exemple 3.

Les groupements méthyle de la matrice du revêtement à base de méthyltriéthoxysilane confèrent à cette couche 5 des propriétés antiadhésives. Ces propriétés peuvent être améliorées par l'ajout d'huile de silicone dans la couche de finition 5, comme décrit dans la demande de brevet européen EP 2 139 964.

Une fois toutes les couches appliquées et séchées, l'article 1 est cuit à 250°C pendant 15 minutes. Les cuissons du revêtement 3 de type sol-gel et celles de la couche 5 de finition doivent être réalisées simultanément.

Bien entendu l'invention n'est pas limitée aux exemples que l'on vient de décrire (principalement des articles culinaires) et il est possible d'envisager d'autres types d'articles chauffants (par exemple des semelles de fer à repasser, plaques de grilles de barbecue etc.) sans sortir du cadre de l'invention.

## Revendications

1. Article (1) comprenant un support (2) comprenant deux faces opposées (21), et un revêtement (3) sol-gel recouvrant l'une au moins des faces (21) dudit support (2),
ledit revêtement (3) sol-gel se présentant sous forme d'un film continu d'un matériau comprenant une matrice formée à partir d'au moins un polyalcoxylate métallique et d'au moins 5% en poids par rapport au poids total du revêtement (3) d'au moins un oxyde métallique colloïdal dispersé dans ladite matrice, et
ledit revêtement (3) sol-gel étant revêtu d'un décor fonctionnel qui se présente sous forme d'au moins une couche discontinue comprenant au moins une substance chimique optiquement non transparente, et dont la composition est choisie dans le groupe des compositions de décor exemptes de liant thermostable,
**caractérisé en ce que** le décor est recouvert d'une couche continue de finition (5) transparente, qui comporte à titre de liant un matériau sol-gel comprenant une matrice formée à partir d'au moins un polyalcoxylate métallique et au moins 5% en poids par rapport au poids total du revêtement d'au moins un oxyde métallique colloïdal dispersé dans ladite matrice.

2. Article (1) selon la revendication 1, **caractérisé en ce que** le décor comporte au moins deux couches discontinues partiellement superposées.

3. Article (1) selon l'une quelconque des revendications 1 et 2, **caractérisé en ce que** le décor comporte en outre à titre d'épaississant un polyélectrolyte anionique à raison de 2 % à 20 % en poids par rapport au poids total du décor.

4. Article (1) selon l'une quelconque des revendications 1 à 3, **caractérisé en ce que** la substance chimique optiquement non transparente est choisie parmi les pigments thermostables, les pigments thermochromes, les paillettes, et leurs mélanges.

5. Article (1) selon la revendication 4, **caractérisé en ce que** le décor comporte, à titre de substance chimique optiquement non transparente une composition pigmentaire thermochrome, avec au moins un pigment thermochrome, qui est de préférence semi-conducteur (SC).

6. Article (1) selon la revendication 5, **caractérisé en ce que** ladite composition pigmentaire thermochrome comprend :
∘ des grains pigmentaires composites à structure coeur-enveloppe, dont le diamètre est compris entre 20 nm et 25000 nm et qui comprennent chacun :
▪ un coeur comprenant au moins un pigment SC thermochrome liposensible à chaud, et
▪ une enveloppe solide, transparente et continue, qui est constituée par un matériau minéral ou un matériau hybride organo-minéral.

7. Article (1) selon la revendication 6, **caractérisé en ce que** ladite composition pigmentaire thermochrome comprend en outre au moins un pigment thermostable, se trouvant à l'intérieur ou à l'extérieur des grains pigmentaires composites.

8. Article (1) selon la revendication 6 ou 7, **caractérisé en ce que** l'enveloppe des grains pigmentaires composites est une coque de silice.

9. Article (1) selon l'une quelconque des revendications 1 à 8, **caractérisé en ce qu'**il constitue un article culinaire (1) dont une des faces opposées est une face intérieure (21) concave destinée à être disposée du côté d'aliments susceptibles d'être introduits dans ledit article (1), et une seconde desdites faces opposées est une face extérieure convexe destinée à être disposée vers une source de chaleur.

10. Article (1) selon l'une quelconque des revendications 1 à 9, **caractérisé en ce que** le support (2) est en un matériau choisi parmi les métaux, le bois, le verre, les céramiques et les matières plastiques.

11. Article (1) selon la revendication 10, **caractérisé en ce que** le support est un support métallique en aluminium anodisé ou non, ou en aluminium poli, brossé ou microbillé, sablé, traité chimiquement ou en acier inoxydable poli, brossé ou microbillé, ou en fonte, ou en cuivre martelé ou poli.

12. Procédé de fabrication d'un article (1) tel que défini selon l'une quelconque des revendications 1 à 11, comprenant les étapes successives suivantes :
a) la fourniture d'un support métallique (2) en forme comprenant deux faces opposées (21), puis
b) la réalisation d'un revêtement (3) sol-gel sur l'une au moins des faces (21) dudit support (2), qui comprend les étapes successives suivantes :
• b1) la préparation d'une composition sol-gel SG comprenant au moins un oxyde métallique colloïdal et au moins un précurseur de type alcoxyde métallique ;
• b2) l'application, sur tout ou partie de l'une au moins des faces (21) dudit support (2), d'au moins une couche de la composition sol-gel SG ayant une épaisseur comprise d'au moins 5 µm ; puis
d) la cuisson de l'article (1) pour obtenir un revêtement (3) sol-gel d'au moins 1 µm d'épaisseur,
ledit procédé étant **caractérisé en ce qu'**il comporte en outre, préalablement à l'étape d) de cuisson, une étape c) de réalisation d'un décor fonctionnel comprenant l'application, sur au moins une partie du revêtement (3) sol-gel, d'au moins une couche de composition de décor comprenant au moins une substance chimique optiquement non transparente pour former un décor, ladite composition de décor présentant une viscosité minimale de 1,5 Pa.s mesurée à température ambiante et pour une vitesse de cisaillement entre 1 et 1000 s⁻¹.

13. Procédé selon la revendication 12, **caractérisé en ce qu'**il comporte en outre, entre l'étape c) de réalisation du décor fonctionnel et la cuisson d) de l'article (1), une étape c') d'application, sur ledit décor, d'une couche continue de finition (5) transparente comprenant :
- la préparation d'une composition sol-gel transparente SG' comprenant au moins un alcoxyde métallique colloïdal et au moins un précurseur de type oxyde métallique; puis
- l'application, sur le décor et les parties du revêtement sol-gel (3) éventuellement non recouvertes par le décor, d'au moins une couche de la composition sol-gel SG' ayant une épaisseur d'au moins 1 µm à l'état humide.

14. Procédé selon la revendication 12 ou 13, **caractérisé en ce que** le décor est exempt de liant thermostable et comporte à titre d'épaississant un polyélectrolyte anionique à raison de 2 % à 20 % en poids par rapport au poids total du décor.

## Patentansprüche

1. Artikel (1), umfassend einen Träger (2), umfassend zwei gegenüberliegende Flächen (21), und eine Sol-Gel-Beschichtung (3), welche mindestens eine der Flächen (21) des Trägers (2) bedeckt,
wobei die Sol-Gel-Beschichtung (3) in Form eines kontinuierlichen Films eines Materials vorliegt, das eine Matrix umfasst, die aus mindestens einem metallischen Polyalcoxylat und mindestens 5 Gew.-% in Bezug auf das Gesamtgewicht der Beschichtung (3) mindestens eines kolloidalen Metalloxids besteht, das in der Matrix verteilt ist, und
die Sol-Gel-Beschichtung (3) mit einem funktionellen Dekor beschichtet ist, das in Form mindestens einer diskontinuierlichen Schicht vorliegt, die mindestens eine optisch nicht transparente chemische Substanz umfasst, und dessen Zusammensetzung aus der Gruppe der Dekorzusammensetzungen ohne thermisch stabiles Bindemittel ausgewählt ist,
**dadurch gekennzeichnet, dass** das Dekor mit einer transparenten kontinuierlichen Finish-Schicht (5) bedeckt ist, die als Bindemittel ein Sol-Gel-Material aufweist, das eine Matrix umfasst, die aus mindestens einem metallischen Polyalcoxylat und mindestens 5 Gew.-% in Bezug auf das Gesamtgewicht der Beschichtung mindestens eines in der Matrix verteilten kolloidalen Metalloxids gebildet ist.

2. Artikel (1) nach Anspruch 1, **dadurch gekennzeichnet, dass** das Dekor mindestens zwei diskontinuierliche, teilweise übereinanderliegende Schichten aufweist.

3. Artikel (1) nach einem der Ansprüche 1 und 2, **dadurch gekennzeichnet, dass** das Dekor ferner als Verdickungsmittel einen anionischen Polyelektrolyten in einer Menge von 2 bis 20 Gew.-% in Bezug auf das Gesamtgewicht des Dekors aufweist.

4. Artikel (1) nach einem der Ansprüche 1 bis 3, **dadurch gekennzeichnet, dass** die optisch nicht transparente chemische Substanz aus den thermisch stabilen Pigmenten, den thermochromen Pigmenten, den Pailletten und deren Gemischen ausgewählt ist.

5. Artikel (1) nach Anspruch 4, **dadurch gekennzeichnet, dass** das Dekor als optisch nicht transparente chemische Substanz eine thermochrome Pigmentzusammensetzung aufweist mit mindestens einem thermochromen Pigment, das vorzugsweise halbleitend ist (SC) .

6. Artikel (1) nach Anspruch 5, **dadurch gekennzeichnet, dass** die thermochrome Pigmentzusammensetzung umfasst:
∘ Komposit-Pigmentkörner mit Kern-Hülle-Struktur, deren Durchmesser zwischen 20 nm und 25000 nm liegt und die jeweils umfassen:
▪ einen Kern, umfassend mindestens ein thermochromes warm liposensibles SC-Pigment, und
▪ eine feste, transparente und kontinuierliche Hülle, die von einem mineralischen Material oder einem organomineralischen Hybridmaterial gebildet ist.

7. Artikel (1) nach Anspruch 6, **dadurch gekennzeichnet, dass** die thermochrome Pigmentzusammensetzung ferner mindestens ein thermisch stabiles Pigment umfasst, das sich im innerhalb oder außerhalb der Komposit-Pigmentkörner befindet.

8. Artikel (1) nach Anspruch 6 oder 7, **dadurch gekennzeichnet, dass** die Hülle der Komposit-Pigmentkörner eine Siliziumoxidschale ist.

9. Artikel (1) nach einem der Ansprüche 1 bis 8, **dadurch gekennzeichnet, dass** er einen kulinarischen Artikel (1) darstellt, von dem eine der gegenüberliegenden Flächen eine konkave innere Fläche (21) ist, die bestimmt ist, auf der Seite von Lebensmitteln angeordnet zu sein, die in den Artikel (1) eingeführt sein könnten, und eine zweite der gegenüberliegenden Flächen eine konvexe äußere Fläche ist, die bestimmt ist, zu einer Wärmequelle angeordnet zu sein.

10. Artikel (1) nach einem der Ansprüche 1 bis 9, **dadurch gekennzeichnet, dass** der Träger (2) aus einem Material ist, das aus den Metallen, dem Holz, dem Glas, den Keramiken und den Kunststoffen ausgewählt ist.

11. Artikel (1) nach Anspruch 10, **dadurch gekennzeichnet, dass** der Träger ein metallischer Träger aus Aluminium, anodisiert oder nicht, oder aus poliertem, gebürsteten oder kugelgestrahltem, sandgestrahltem, chemisch bearbeitetem Aluminium oder aus poliertem, gebürsteten oder kugelgestrahltem rostfreiem Stahl oder aus Guss oder aus gehämmertem oder poliertem Kupfer ist.

12. Verfahren zur Herstellung eines Artikels (1) nach einem der Ansprüche 1 bis 11, umfassend die folgenden aufeinanderfolgenden Schritte:
a) Bereitstellen eines geformten metallischen Trägers (2), umfassend zwei gegenüberliegende Flächen (21), dann
b) Herstellen einer Sol-Gel-Beschichtung (3) auf mindestens einer der Flächen (21) des Trägers (2), umfassend die folgenden aufeinanderfolgenden Schritte:
▪ b1) Herstellen einer Sol-Gel-Zusammensetzung SG, umfassend mindestens ein kolloidales Metalloxid und mindestens einen Vorläufer vom Typ metallisches Alcoxid;
▪ b2) Auftragen, auf die gesamte oder einen Teil mindestens einer der Flächen (21) des Trägers (2) mindestens einer Schicht der Sol-Gel-Zusammensetzung SG, die eine Stärke von mindestens 5 µm inklusive hat; dann
d) Brennen des Artikels (1), um eine Sol-Gel-Beschichtung (3) in einer Stärke von mindestens 1 µm zu erhalten,
wobei das Verfahren **dadurch gekennzeichnet ist, dass** es ferner vor dem Brennschritt d) einen Schritt c) der Realisierung eines funktionellen Dekors aufweist, umfassend das Auftragen auf mindestens einen Teil der Sol-Gel-Beschichtung (3) mindestens einer Dekorzusammensetzungsschicht, umfassend mindestens eine optisch nicht transparente chemische Substanz, um ein Dekor zu bilden, wobei die Dekorzusammensetzung eine minimale Viskosität von 1,5 Pa.s aufweist, gemessen bei Raumtemperatur, und für eine Schergeschwindigkeit zwischen 1 und 1000 s⁻¹.

13. Verfahren nach Anspruch 12, **dadurch gekennzeichnet, dass** es ferner zwischen dem Schritt c) der Realisierung des funktionellen Dekors und dem Brennen d) des Artikels (1) einen Schritt c') des Auftragens auf das Dekor einer transparenten kontinuierlichen Finish-Schicht (5) aufweist, umfassend:
- das Herstellen einer transparenten Sol-Gel-Zusammensetzung SG', umfassend mindestens ein kolloidales metallisches Alcoxid und mindestens einen Vorläufer vom Typ Metalloxid; dann
- das Auftragen, auf das Dekor und die Teile der Sol-Gel-Beschichtung (3), die eventuell nicht von dem Dekor bedeckt sind, mindestens einer Schicht der Sol-Gel-Zusammensetzung SG' mit einer Stärke von mindestens 1 µm in feuchtem Zustand.

14. Verfahren nach Anspruch 12 oder 13, **dadurch gekennzeichnet, dass** das Dekor ohne thermisch stabiles Bindemittel ist und als Verdickungsmittel einen anionischen Polyelektrolyten in einer Menge von 2 bis 20 Gew.-% in Bezug auf das Gesamtgewicht des Dekors aufweist.

## Claims

1. An article (1) comprising a substrate (2) having two opposite faces (21), and a sol-gel coating (3) covering at least one of the faces (21) of said substrate (2),
said sol-gel coating (3) being in the form of a continuous film of a material including a matrix formed by at least one metal polyalkoxylate and at least 5% by weight with respect to the total weight of the coating (3) of at least one colloidal metal oxide dispersed in said matrix, and
said sol-gel coating (3) being coated with a functional design which is in the form of at least one non-continuous layer including at least one optically non-transparent chemical substance, and whose composition is selected from the group of design compositions free of thermostable binder,
**characterized in that** the design is covered with a continuous transparent finishing layer (5), which comprises as a binder a sol-gel material including a matrix formed by at least one metal polyalkoxylate and at least 5% by weight with respect to the total weight of the coating of at least one colloidal metal oxide dispersed in said matrix.

2. The article (1) according to claim 1, **characterized in that** the design comprises at least two partially superimposed non-continuous layers.

3. The article (1) according to any one of claims 1 and 2, **characterized in that** the design further comprises, as a thickener, an anionic polyelectrolyte in an amount of 2% to 20% by weight with respect to the total weight of the design.

4. The article (1) according to any one of claims 1 to 3, **characterized in that** the optically non-transparent chemical substance is selected from thermostable pigments, thermochromic pigments, flakes, and mixtures thereof.

5. The article (1) according to claim 4, **characterized in that** the design comprises, as an optically non-transparent chemical substance, a thermochromic pigment composition, with at least one thermochromic pigment, which is preferably semiconducting (SC).

6. The article (1) according to claim 5, **characterized in that** said thermochromic pigment composition comprises:
∘ composite pigment grains with a core-envelope structure, the diameter of which is between 20 nm and 25000 nm, and each of which includes:
▪ a core including at least one SC pigment that is thermochromic and lipid-sensitive under heat, and
▪ a solid, transparent and continuous envelope formed by an inorganic material or a hybrid organomineral material.

7. The article (1) according to claim 6, **characterized in that** said thermochromic pigment composition further comprises at least one thermostable pigment, located inside or outside the composite pigment grains.

8. The article (1) according to claim 6 or 7, **characterized in that** the envelope of the composite pigment grains is a silica shell.

9. The article (1) according to any one of claims 1 to 8, **characterized in that** it is a cooking article (1) one of the opposite faces of which is an internal concave face (21) intended to be arranged on the side of the food that may be placed inside said article (1), and a second of said opposite faces is an external convex face intended to be arranged on a heat source.

10. The article (1) according to any one of claims 1 to 9, **characterized in that** the substrate (2) is made of a material selected from metals, wood, glass, ceramics and plastics.

11. The article (1) according to claim 10, **characterized in that** the substrate is a metal substrate made of anodized or non-anodized aluminium; or of polished, brushed or microbeaded, sanded, chemically treated aluminium; or of polished, brushed or microbeaded stainless steel; or of cast iron; or of hammered or polished copper.

12. A method for producing an article (1) as defined according to any one of claims 1 to 11, comprising the following series of steps:
a) providing a formed metal substrate (2) having two opposite faces (21), then
b) producing a sol-gel coating (3) on at least one of the faces (21) of said substrate (2), which comprises the following series of steps:
• b1) preparing a sol-gel composition SG including at least one colloidal metal oxide and at least one metal alkoxide precursor;
• b2) applying, on all or part of at least one of the faces (21) of said substrate (2), at least one layer of the sol-gel composition SG having a thickness of at least 5 µm; then
d) baking the article (1) to obtain a sol-gel coating (3) having a thickness of at least 1 µm,
said method being **characterized in that** it further comprises, prior to the baking step d), a step c) of producing a functional design including the application, on at least a part of the sol-gel coating (3), of at least one layer with a design composition including at least one optically non-transparent chemical substance in order to form a design, said design composition having a minimum viscosity of 1.5 Pa.s measured at room temperature and for a shear rate of between 1 and 1000 s⁻¹.

13. The method according to claim 12, **characterized in that** it further comprises, between step c) of producing the functional design and the baking d) of the article (1), a step c') of applying, on said design, a continuous transparent finishing layer (5), comprising:
- the preparation of a transparent sol-gel composition SG' including at least one colloidal metal alkoxide and at least one metal oxide precursor; then
- the application, on the design and the parts of the sol-gel coating (3) that may not be covered by the design, of at least one layer of the sol-gel composition SG' having a thickness of at least 1 µm in the wet state.

14. The method according to claim 12 or 13, **characterized in that** the design is free of thermostable binder and comprises, as a thickener, an anionic polyelectrolyte in an amount of 2% to 20% by weight with respect to the total weight of the design.
